# DEMANDE DE BREVET EUROPEEN

(11) **EP 4 764 285 A1**
(43) Date de publication de la demande: **24.06.2026**
(21) Numéro de dépôt: 25224559.2
(22) Date de dépôt: 17.12.2025
(51) Int. Cl.: F16L 37/084, F16L 37/53

(54) **ÉLÉMENT FEMELLE DE RACCORD FLUIDIQUE, ET RACCORD FLUIDIQUE ASSOCIÉ**

(30) Priorité: 18.12.2024 FR 2414509
(71) Demandeur: Staubli Faverges, 74210 Faverges-Seythenex (FR)
(72) Inventeur: POLY, Olivier, 74210 VAL DE CHAISE (FR); BONNEFOY, Sean, 74540 CHAINAZ-LES-FRASSES (FR); DURIEUX, Christophe, 73200 GILLY SUR ISERE (FR)
(74) Mandataire: Lavoix

(57) **Abrégé**

Cet élément femelle (100), qui ménage un canal interne (V100), comprend un corps principal (110) et un adaptateur (120) mobile en rotation par rapport au corps principal. Le corps principal ménage une ouverture distale (112) prévue pour recevoir un embout mâle (10). L'adaptateur comprend une partie proximale (121B), connectable à une canalisation, et une partie distale (121A) avec une portion tubulaire (124) par laquelle l'adaptateur est emmanché dans un alésage (114) du corps principal. Un support de joints (160), qui est reçu dans le canal interne (V100), supporte un premier joint (191) entre le support de joints (160) et une surface intérieure de la portion tubulaire (124), et un deuxième joint (192) qui est prévu pour assurer une étanchéité entre le support de joints (160) et l'embout mâle (10) en position connectée, le support de joints (160) étant libre en rotation par rapport au corps principal (110).

## Description

La présente invention concerne un élément femelle de raccord fluidique, ainsi qu'un raccord fluidique comprenant un tel élément femelle.

On s'intéresse ici aux raccords fluidiques permettant la connexion rapide d'une première conduite de fluide, pourvue d'un élément femelle, à une autre conduite de fluide pourvue d'un embout mâle complémentaire. Un tel raccord fluidique est aussi appelé « raccord rapide ». L'embout mâle présente une extrémité tubulaire cylindrique portant une collerette de verrouillage, tandis que l'élément femelle comprend un verrou, par exemple un bouton, sur lequel l'utilisateur doit appuyer pour déconnecter l'élément femelle de l'embout mâle. Le raccord fluidique est alors appelé « raccord à bouton ».

L'élément femelle comprend généralement un corps principal, qui est pourvu du bouton de verrouillage, et d'un adaptateur, aussi dit « obturateur », qui est assujetti à la première conduite de fluide. Le corps principal étant assemblé à l'adaptateur. EP-2 878 872-A1 décrit des exemples connus de tels d'éléments femelle. Lorsque la première conduite de fluide est fixe, il peut être nécessaire de pouvoir tourner le corps principal par rapport à l'obturateur pour que le bouton soit plus facilement accessible à l'utilisateur.

US-5,209,262 décrit, par exemple, un élément femelle de raccord fluidique, dans lequel le corps principal est orientable par rapport à l'adaptateur. Une extrémité distale de l'obturateur pénètre dans un alésage du corps principal. Une tige 86, déformable, est introduite par une ouverture ménagée dans le corps, dans un logement défini par des rainures circonférentielles pratiquées dans le corps et l'obturateur. Un joint d'étanchéité est placé entre le corps principal et l'adaptateur. Or, à chaque manoeuvre de pivotement du corps principal par rapport à l'adaptateur, le joint frotte, et tend à s'user, risquant d'entrainer des fuites. En outre, le frottement du joint contribue à un couple de résistance à la rotation du corps principal par rapport à l'obturateur. Ce couple va donc évoluer avec l'usure du joint consécutive aux différentes manœuvres.

C'est à ces problèmes qu'entend plus particulièrement remédier l'invention, en proposant un élément femelle de raccord fluidique à la fiabilité améliorée, et présentant un couple de résistance à la rotation du corps principal par rapport à l'obturateur facilement déterminable et stable.

À cet effet, l'invention concerne un élément femelle de raccord fluidique, l'élément femelle étant prévu pour être connecté à un embout mâle, l'embout mâle comprenant une extrémité avec une première partie cylindrique et une collerette de verrouillage, l'élément femelle comprenant :
- un corps principal, qui ménage un premier passage s'étendant suivant un axe longitudinal, le corps principal comprenant une portion distale et une portion proximale, qui sont alignées selon l'axe longitudinal, le premier passage débouchant de la portion distale par une embouchure distale, le corps principal étant configuré pour recevoir l'embout mâle dans le premier passage en passant par l'embouchure distale,
- un verrou, qui est assemblé à la portion distale et qui est mobile entre :
   - une position de verrouillage, dans laquelle, lorsque l'embout mâle est reçu dans l'embouchure distale en position connectée, le verrou coopère avec la collerette de manière à maintenir l'embout mâle en position connectée, et
   - une position de déverrouillage, dans laquelle le verrou libère la collerette et ne s'oppose pas au retrait de l'embout mâle du corps principal,
- un organe de rappel, qui est configuré pour ramener le verrou de sa position de déverrouillage vers sa position de verrouillage,
- un adaptateur, qui est traversé par un deuxième passage et qui comprend :
   - une partie proximale, de laquelle débouche le deuxième passage et par laquelle l'adaptateur est apte à être fluidiquement connecté à une canalisation, et
   - une partie distale, de laquelle débouche le deuxième passage et par laquelle l'adaptateur est apte à être assemblé à la portion proximale du corps principal, de sorte que le deuxième passage est en communication avec le premier passage, le premier passage et le deuxième passage formant ensemble un canal interne de l'élément femelle,
dans lequel :
- la partie distale de l'adaptateur comporte une portion tubulaire, qui présente une forme cylindrique dans laquelle est ménagée une rainure circonférentielle externe,
- la portion proximale du corps principal comporte un alésage :
   - qui présente une forme complémentaire de la portion tubulaire et qui est configuré pour recevoir la portion tubulaire de l'adaptateur dans une configuration assemblée de l'élément femelle, et
   - dans lequel est ménagée une rainure interne, qui est située en regard de la rainure circonférentielle externe lorsque l'élément femelle est en configuration assemblée, la rainure circonférentielle externe et la rainure interne en regard formant ensemble un espace de blocage
- l'élément femelle comprend aussi un élément de blocage axial, qui est logé en partie dans la rainure circonférentielle externe de la portion tubulaire de l'adaptateur et en partie dans la rainure interne de l'alésage de la partie proximale du corps, de sorte que le corps principal est mobile en rotation par rapport à l'adaptateur,
- l'élément femelle comprend aussi :
   - un support de joints, qui est reçu dans le canal interne et qui ménage un passage interne configuré pour recevoir la partie cylindrique de l'embout mâle,
   - un premier joint d'étanchéité, qui est interposé entre le support de joints et une surface intérieure de la portion tubulaire de l'adaptateur, de manière à assurer une étanchéité entre le support de joints et l'adaptateur,
   - un deuxième joint d'étanchéité, qui est agencé dans le passage interne et qui est prévu pour assurer une étanchéité entre le support de joints et l'embout mâle en position connectée,
- le support de joints est reçu dans le canal interne en étant libre en rotation par rapport au corps principal de l'élément femelle en configuration assemblée.

Grâce à l'invention, le support de joints assure l'étanchéité avec l'adaptateur - par le premier joint - et l'embout mâle - par le deuxième joint - tout en étant libre en rotation par rapport au corps principal. Ainsi le corps principal peut être orienté angulairement par rapport à l'adaptateur, sans que le premier joint frotte contre la surface intérieure de la partie tubulaire de l'obturateur. Le couple de rotation à appliquer par l'utilisateur est indépendant du premier joint et est ainsi essentiellement déterminé par la structure de l'assemblage de l'adaptateur avec le corps principal, au moyen de l'élément de blocage axial. Ainsi le couple de rotation à appliquer reste stable. En outre, l'usure du premier joint est réduite, ce qui contribue à la longévité et à la fiabilité de l'élément femelle de raccord fluidique.

Selon des aspects avantageux mais non obligatoires de l'invention, un tel élément femelle peut incorporer une ou plusieurs des caractéristiques suivantes prises isolément ou selon toute combinaison techniquement admissible :
- L'alésage de la portion proximale comprend :
   - une première portion cylindrique, qui présente un premier diamètre interne et qui est destinée à recevoir la portion tubulaire de l'adaptateur,
   - une deuxième portion cylindrique, qui présente un deuxième diamètre interne, le deuxième diamètre interne étant inférieur au premier diamètre interne,
   - une troisième portion cylindrique, qui présente un troisième diamètre interne, le troisième diamètre interne étant inférieur au deuxième diamètre interne,
   - une paroi de butée, qui s'étend dans un plan perpendiculaire à l'axe longitudinal entre la deuxième portion cylindrique et la troisième portion cylindrique,
   alors que le support de joints comprend :
   - une partie proximale, qui présente un premier diamètre externe et dans laquelle est ménagée une première gorge de réception du premier joint d'étanchéité, et
   - une partie intermédiaire, qui présente un deuxième diamètre externe, le deuxième diamètre externe étant supérieur au premier diamètre externe, la partie intermédiaire étant logée dans la deuxième portion cylindrique de l'alésage.
- La portion distale du corps principal ménage un orifice, qui s'étend selon un axe de verrouillage radial à l'axe longitudinal et qui débouche dans le premier passage,
   alors que le verrou comprend une portion de verrouillage, qui est reçue dans l'orifice et dans laquelle est ménagée une ouverture apte à recevoir l'embout mâle,
   que le verrou est mobile en translation par rapport au corps principal selon l'axe de verrouillage, la position de verrouillage et la position de déverrouillage étant deux positions axiales le long de l'axe de verrouillage,
   et que l'élément femelle comprend une rondelle de butée, qui est reçue dans le canal interne entre le verrou et le support de joints, la rondelle de butée comprenant :
      - une protrusion, qui s'étend dans l'ouverture du verrou et qui est prévue pour autoriser les mouvements du verrou entre la position de verrouillage et la position de déverrouillage, tout en empêchant les mouvements au-delà de la position de verrouillage et,
      - une surface de guidage, qui est prévue pour guider la première partie cylindrique de l'embout mâle de l'ouverture du verrou vers le passage interne du support de joints.
- L'alésage de la portion proximale du corps principal comprend :
   - une première portion cylindrique, qui présente un premier diamètre interne et qui est destinée à recevoir la portion tubulaire de l'adaptateur,
   - une deuxième portion cylindrique, qui présente un deuxième diamètre interne, le deuxième diamètre interne étant inférieur au premier diamètre interne,
   - une troisième portion cylindrique, qui présente un troisième diamètre interne, le troisième diamètre interne étant inférieur au deuxième diamètre interne,
   - une paroi de butée, qui s'étend dans un plan perpendiculaire à l'axe longitudinal entre la deuxième portion cylindrique et la troisième portion cylindrique,
   alors que la rondelle de butée est en appui axial contre la paroi de butée et centrée dans la troisième portion cylindrique.
- Le support de joints et la rondelle de butée forment une pièce unique.
- Le support de joints et la rondelle de butée forment deux pièces distinctes, alors que le support de joints comprend une paroi distale, qui est orientée vers la rondelle de butée et sur laquelle est ménagé un bossage circulaire,
   et que la rondelle de butée est en appui axial contre la paroi distale du support de joints par l'intermédiaire du bossage circulaire.
- Le support de joints et la rondelle de butée forment deux pièces distinctes, alors que le support de joints comprend une paroi distale, qui est orientée vers la rondelle de butée,
   et que la rondelle de butée comprend une face proximale, sur laquelle est ménagé un bossage circulaire en appui axial contre la paroi distale du support de joints.
- L'élément femelle comprend :
   - une soupape, qui est reçue dans le canal interne et qui est mobile en translation le long de l'axe longitudinal entre une position avant, dans laquelle la soupape ferme la circulation de fluide au travers du canal interne, et une position arrière, dans laquelle la circulation de fluide au travers du canal interne n'est pas empêchée, et
   - un ressort de soupape, qui est configuré pour ramener la soupape de la position arrière à la position avant, la soupape étant configurée pour être repoussée dans la position arrière, à l'encontre du ressort de soupape, par l'extrémité de l'embout mâle en position connectée.
- La soupape est agencée d'un côté opposé à l'embouchure distale du corps principal par rapport au deuxième joint, la soupape comprenant :
   - une partie distale, qui est reçue dans le passage interne du support de joints lorsque la soupape est en position fermée et par l'intermédiaire de laquelle la soupape est repoussée en position ouverte par l'extrémité de l'embout mâle en position connectée, et
   - une butée axiale, qui s'étend radialement à l'axe longitudinal et qui présente une face avant, qui est en appui axial contre le support de joints lorsque la soupape est dans la position fermée, la butée axiale présentant une face arrière, opposée à la face avant,
   alors que le ressort de soupape est agencé entre la face arrière de la butée axiale et l'adaptateur.
- Le support de joints est vissé dans une surface interne de la partie distale de l'adaptateur.
- La rainure interne de l'alésage est une rainure circonférentielle interne,
   alors que l'élément de blocage est un jonc déformable, qui est introduit dans l'espace de blocage par un trou ménagé dans le corps principal.
- La rainure interne de l'alésage est une rainure circonférentielle interne,
   alors que l'élément de blocage est une pluralité de billes, qui sont introduites dans l'espace de blocage par un trou ménagé dans le corps principal, le trou étant obstrué après montage.
- L'alésage proximal du corps principal comprend une pluralité de trous, qui sont chacun prévus pour le passage d'une goupille respective, qui sont ménagés orthoradialement à l'axe longitudinal et qui débouchent dans l'alésage, l'ensemble des trous de passage de goupille formant la rainure interne,
   alors que les goupilles forment ensemble l'élément de blocage, chaque goupille étant introduite dans l'espace de blocage par le trou de passage correspondant.

L'invention concerne aussi un raccord fluidique, comprenant :
- un exemplaire de l'élément femelle tel que décrit précédemment, et
- un embout mâle, qui comprend une extrémité avec une première partie cylindrique et une collerette de verrouillage,
dans lequel l'embout mâle est reçu en position connectée dans le canal interne de l'élément femelle.

L'invention sera mieux comprise, et d'autres avantages de celle-ci apparaîtront plus clairement à la lumière de la description qui va suivre, de plusieurs modes de réalisation d'un élément femelle et d'un raccord fluidique, conformes à son principe, donnée uniquement à titre d'exemple et faite en référence aux dessins annexés, dans lesquels :
- [Fig 1] la figure 1 est une coupe longitudinale d'un raccord fluidique conforme à un premier mode de réalisation de l'invention et représentée dans une configuration désaccouplée, le raccord fluidique comprenant un élément femelle, lui-aussi conforme à l'invention ;
- [Fig 2] la figure 2 représente, sur deux inserts a) et b), une vue en perspective éclatée de l'élément femelle de la figure 1, et une coupe transversale de l'élément femelle de la figure 1, selon un plan II-II ;
- [Fig 3] la figure 3 est une coupe longitudinale du raccord fluidique de la figure 1, représenté dans une configuration accouplée ;
- [Fig 4] la figure 4 représente, sur deux inserts a) et b), une coupe longitudinale d'un élément femelle appartenant à un raccord fluidique conforme à un deuxième mode de réalisation de l'invention, et une vue d'un détail de cet élément femelle ;
- [Fig 5] la figure 5 représente respectivement, sur deux inserts a) et b), une coupe longitudinale d'un élément femelle appartenant à un raccord fluidique conforme à un troisième mode de réalisation de l'invention, et une vue d'un détail de cet élément femelle ;
- [Fig 6] la figure 6 représente respectivement, sur deux inserts a) et b), une coupe longitudinale d'un élément femelle appartenant à un raccord fluidique conforme à un quatrième mode de réalisation de l'invention, et une vue d'un détail de cet élément femelle :
- [Fig 7] la figure 7 représente respectivement, sur deux inserts a) et b), une coupe longitudinale d'un élément femelle appartenant à un raccord fluidique conforme à un cinquième mode de réalisation de l'invention, et une coupe transversale de cet élément femelle, selon un plan VII-VII, et
- [Fig 8] la figure 8 représente respectivement, sur deux inserts a) et b), une coupe longitudinale d'un élément femelle appartenant à un raccord fluidique conforme à un sixième mode de réalisation de l'invention, et une coupe transversale de cet élément femelle, selon un plan VIII-VIII.

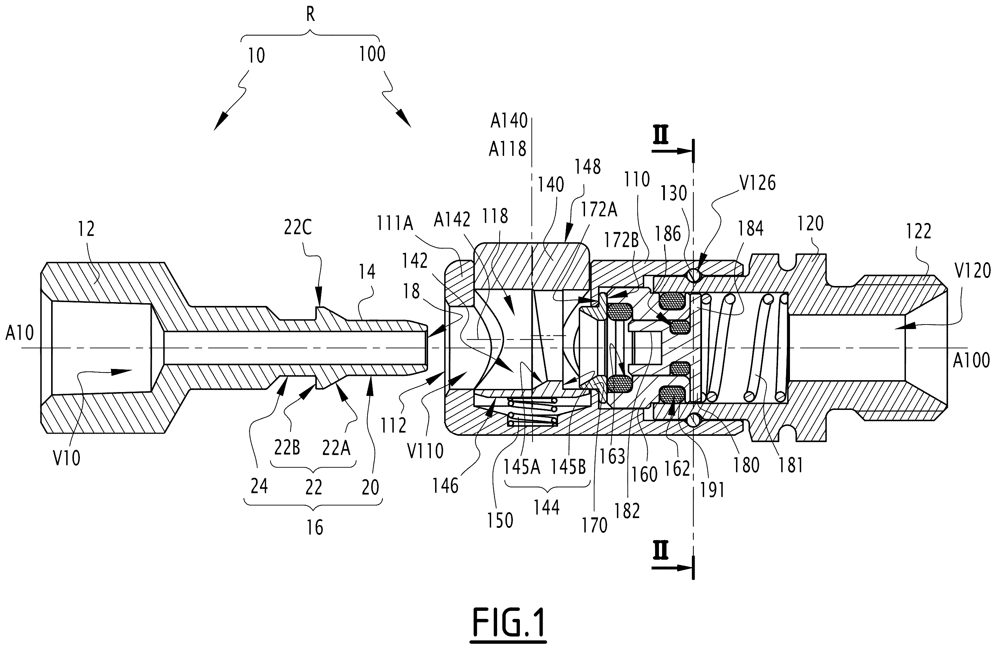

Un raccord fluidique R, conforme à un premier mode de réalisation de l'invention, est décrit en référence aux figures 1 à 3. Le raccord fluidique R comprend un embout mâle 10, qui est situé sur la gauche de la figure 1, et un élément femelle 100, situé sur la droite de la figure 1. La description qui suit est faite en relation aux divers éléments du raccord fluidique R tels que représentés sur les figures, sachant qu'il peut en être autrement dans la réalité.

Le raccord fluidique R est représenté dans une configuration déconnectée à la figure 1, l'embout mâle 10 étant situé en regard de l'élément femelle 100. Dans la configuration déconnectée, pour chacun des éléments choisis parmi l'élément femelle 100 et l'embout mâle 10, un côté distal - ou côté avant - de cet élément est le côté le plus proche de l'autre élément, tandis qu'un côté proximal - ou côté arrière - de cet élément est le côté le plus éloigné de l'autre élément. Ainsi, sur la figure 1 le côté distal de l'embout mâle 10 est situé sur la droite, en regard de l'élément femelle 100, tandis que le côté proximal de l'embout mâle 10 est situé sur la gauche. Symétriquement, sur la figure 1 le côté distal de l'élément femelle 100 est situé sur la gauche, en regard de l'embout mâle 10, tandis que le côté proximal de l'élément femelle 100 est situé sur la droite.

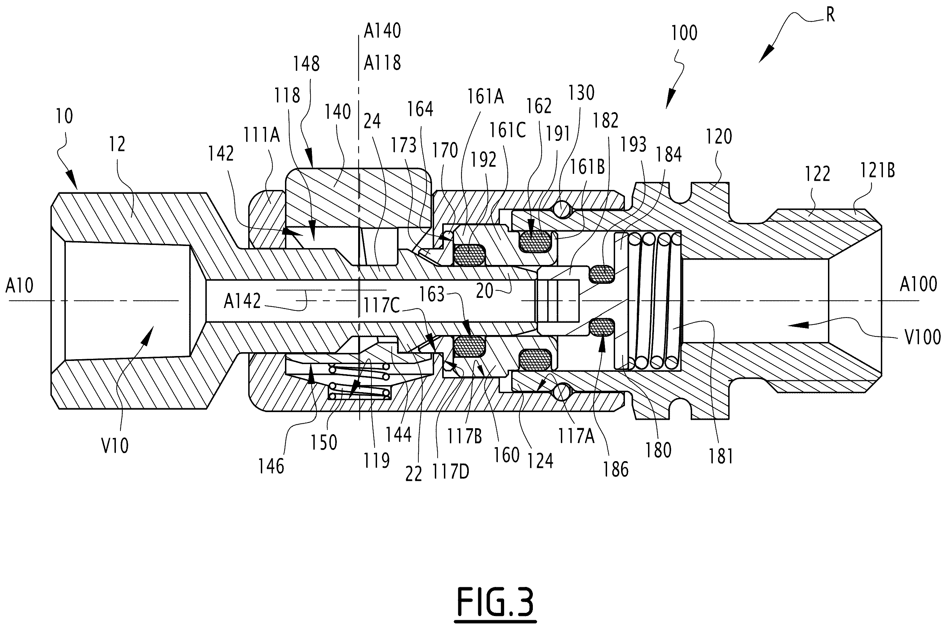

L'embout mâle 10, qui est aussi appelé simplement embout, voire parfois « about », présente une forme tubulaire creuse qui ménage un passage interne V10 s'étendant le long d'un axe principal A10. L'embout mâle 10 comprend une partie proximale 12, par laquelle débouche le passage interne V10 et qui est configurée pour être solidarisé avec une conduite de fluide, par exemple un tuyau, de sorte que le passage interne est en communication fluidique avec la conduite de fluide. La conduite de fluide n'est pas représentée. L'embout 10 comprend une partie distale 14, qui est prévue pour être reçue dans l'élément femelle 100, l'embout mâle 10 étant alors dans une position connectée par rapport à l'élément femelle 100. Le raccord fluidique R est alors dans une configuration connectée, comme représenté à la figure 3.

La partie distale 14 présente ici une forme de révolution autour de l'axe principal A10. La partie distale 14 présente une extrémité 16, qui ménage une embouchure 18 par laquelle débouche le passage interne V10. En se déplaçant de l'embouchure 18 vers la partie proximale 12 sur un côté externe de l'embout mâle 10, l'extrémité 16 comprend :
- une première partie cylindrique 20, de forme tubulaire,
- une collerette 22 de verrouillage, qui s'étend en saillie par rapport à la première partie cylindrique 20, et
- une deuxième partie cylindrique 24, qui est ménagée en retrait de la collerette 22.

Autrement dit, la collerette 22 est ménagée en saillie par rapport à la deuxième partie cylindrique 24. De préférence, la deuxième partie cylindrique 24 est tubulaire. De préférence, la deuxième partie cylindrique 24 présente un diamètre égal à un diamètre de la première partie cylindrique 20.

La collerette 22 présente avantageusement une section tronconique, qui diverge vers le côté proximal de l'embout mâle 10. Dans l'exemple illustré, la collerette 22 présente une première face 22A, qui prolonge la première partie cylindrique 20 et qui présente une forme de cône ; et une deuxième face dite « face de retenue » 22B, qui est portée par un plan orthogonal à l'axe principal A10 et qui est interposée entre la première face 22A et la deuxième partie cylindrique 24. La face de retenue 22B est ainsi une face axiale. La première face 22A est ainsi orientée vers le côté distal de l'embout mâle 10, tandis que la face de retenue 22B est orientée vers le côté proximal de l'embout mâle 10. La face de retenue 22B forme un côté arrière de la collerette 22.

Dans l'exemple illustré, la première face 22A conique et la face de retenue 22B axiale sont reliées par une troisième partie cylindrique 22C. La troisième partie cylindrique 22C, qui présente un diamètre supérieur au diamètre de la première partie cylindrique 20 et au diamètre de la deuxième partie cylindrique 24, forme ainsi un sommet de la collerette 22.

On décrit à présent l'élément femelle 100.

L'élément femelle 100 s'étend globalement selon un axe longitudinal A100 et qui ménage un canal interne V100 de passage de fluide. Lorsque le raccord fluidique 100 est en configuration connectée, le canal interne V100 de l'élément femelle 100 est en communication fluidique avec le passage interne V10 de l'embout mâle 10, l'axe principal A10 étant aligné avec l'axe longitudinal A100.

L'élément femelle 100 comprend un corps principal 110, qui est traversé par un premier passage V110, et un adaptateur 120, qui est traversé par un deuxième passage V120 et qui est assemblé au corps principal 110 dans une configuration assemblée de l'élément femelle 100, de sorte que le deuxième passage V120 est en communication avec le premier passage V110.

Le premier passage V110 s'étend suivant l'axe longitudinal A100, le corps principal 110 comprenant une portion distale 111A et une portion proximale 111B, qui sont alignées selon l'axe longitudinal A100. Le premier passage V110 débouche de la portion distale 111A par une embouchure distale 112. Le corps principal 110 est configuré pour recevoir l'embout mâle 10 dans le premier passage V110 en passant par l'embouchure distale 112. L'embout mâle 10 est alors dans la position connectée par rapport à l'élément femelle 100.

La portion proximale 111B du corps principal 110 comporte un alésage 114. L'alésage 114 présente une forme cylindrique à section circulaire centrée sur l'axe longitudinal A100. L'alésage 114 est configuré pour recevoir une partie distale 121A de l'adaptateur 120 lorsque l'élément femelle 100 est dans la configuration assemblée.

Le premier passage V110 est ainsi délimité radialement par l'alésage 114. La portion proximale 111B présente une surface d'extrémité 115, qui est ici une surface axiale, c'est-à-dire une surface portée par un plan orthogonal à l'axe longitudinal A100. La portion proximale 111B comprend un côté interne, qui est orienté vers l'axe longitudinal A100, et un côté externe, qui est orienté à l'opposé du côté interne. La portion proximale 111B comprend une rainure interne 116, qui est ménagée en creux dans l'alésage 114. La rainure interne 116 est globalement portée par un plan orthogonal à l'axe longitudinal A100, autrement dit la rainure interne 116 est une rainure radiale à l'axe longitudinal A100. Dans le premier mode de réalisation, la rainure interne 116 s'étend sur 360° autour de l'axe longitudinal A110 et forme donc une rainure circonférentielle interne.

De préférence, l'alésage 114 de la portion proximale 111B comprend, du côté interne et en se déplaçant de la surface d'extrémité 115 vers l'embouchure distale 112 :
- une première portion cylindrique 117A, qui présente un premier diamètre interne et qui est destinée à recevoir la partie distale 121A de l'adaptateur 120,
- une deuxième portion cylindrique 117B, qui présente un deuxième diamètre interne, le deuxième diamètre interne étant inférieur au premier diamètre interne,
- une troisième portion cylindrique 117C, qui présente un troisième diamètre interne, le troisième diamètre interne étant inférieur au deuxième diamètre interne,
- une paroi de butée 117D, qui s'étend dans un plan perpendiculaire à l'axe longitudinal A100 entre la deuxième portion cylindrique 117B et la troisième portion cylindrique 117C. Autrement dit, la paroi de butée est une paroi axiale.

L'adaptateur 120 comprend, outre la partie distale 121A, une partie proximale 121B, de laquelle débouche le deuxième passage V120 et qui comporte des moyens de solidarisation 122 avec une canalisation. La canalisation n'est pas représentée. Autrement dit, l'adaptateur 120 est apte à être fluidiquement connecté à une canalisation, de sorte que le deuxième passage V120 est en communication fluidique avec la canalisation.

Dans l'exemple non limitatif illustré, les moyens de solidarisation 122 sont formés par une portion filetée. En variante non illustrée, les moyens de solidarisation présentent une forme différente, par exemple une queue de sapin destinée à recevoir un tuyau souple maintenu par un collier de serrage, etc.

La partie distale 121A de l'adaptateur 120, par laquelle l'obturateur est apte à être assemblé à la portion proximale 111B du corps principal 110, comporte une portion tubulaire 124. La portion tubulaire 124 présente une forme cylindrique à section circulaire, centrée sur l'axe longitudinal A100.

La portion tubulaire 124 est configuré pour être reçue dans l'alésage 114 lorsque l'élément femelle 100 est dans la configuration assemblée. Autrement dit l'alésage 114 présente une forme complémentaire de la portion tubulaire 124.

Le deuxième passage V120 est ainsi délimité radialement par la portion tubulaire 124. La portion tubulaire 124 présente une surface d'extrémité 125, qui est ici une surface axiale, c'est-à-dire une surface portée par un plan orthogonal à l'axe longitudinal A100. La portion tubulaire 124 comprend un côté interne, qui est orienté vers l'axe longitudinal A100, et un côté externe, qui est orienté à l'opposé du côté interne. La portion tubulaire 124 présente, du côté interne, un diamètre interne. La portion tubulaire 124 comprend, une rainure circonférentielle externe 126, qui est ménagée en creux dans portion tubulaire 124, du côté externe de portion tubulaire 124. La rainure circonférentielle externe 126 s'étend sur 360° autour de l'axe longitudinal A110. La rainure circonférentielle externe 126 est globalement portée par un plan orthogonal à l'axe longitudinal A100, autrement dit la rainure circonférentielle externe 126 est une rainure radiale à l'axe longitudinal A100.

Lorsque l'élément femelle 100 est en configuration assemblée, le côté externe de la portion tubulaire 124 est situé en regard du côté interne de l'alésage 114, et la rainure interne 116 est située en regard de la rainure circonférentielle externe 126. Autrement dit, la rainure interne 116 et la rainure circonférentielle externe 126 sont globalement portées par un même plan. La rainure circonférentielle externe 126 et la rainure interne 116 en regard définissent ensemble un espace de blocage V126. Dans le premier mode de réalisation, l'espace de blocage V126 présente sensiblement une forme de tore à section circulaire, centré sur l'axe longitudinal A100.

Un trou 128 est ménagé au travers du corps principal 110, le trou 128 reliant l'espace de blocage V126 au côté externe de la portion proximale 111B. De préférence, le trou 128 est ménagé selon une direction orthoradiale à l'axe longitudinal A100. Par direction orthodariale, on entend que le trou 128 est ménagé selon un axe orthogonal à un plan radial à l'axe longitudinal A100, un plan radial à l'axe longitudinal A100 étant un plan portant l'axe longitudinal A100.

L'élément femelle 100 comprend aussi un élément de blocage axial 130. L'élément de blocage axial 130 est reçu dans l'espace de blocage V126, de manière à empêcher les mouvements de translation du corps principal 110 par rapport à l'adaptateur 120 selon l'axe longitudinal A100, tout en autorisant les mouvements de rotation du corps principal 110 par rapport à l'adaptateur 120 autour de l'axe longitudinal A100. Autrement dit, la liaison cinématique entre le corps principal 110 et l'adaptateur 120 est une liaison pivot.

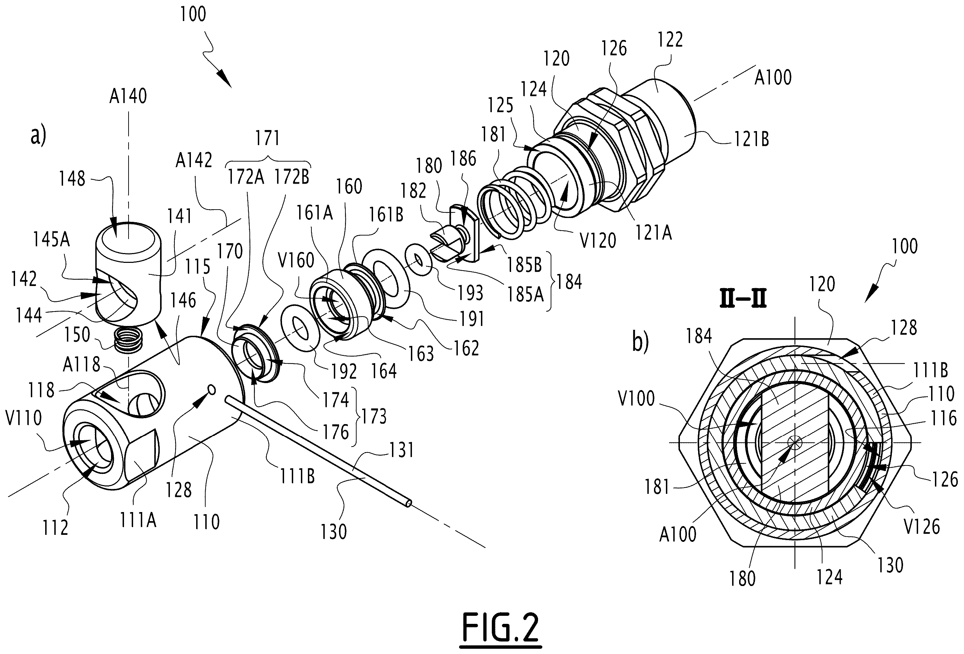

Dans le premier mode de réalisation, l'élément de blocage axial 130 est un jonc 131 cylindrique, qui est introduit dans l'espace de blocage V126 en passant par le trou 128. À la figure 2 a), le jonc 131 est représenté avant d'être introduit dans le trou 128, le jonc 131 se présentant alors une forme de tige rectiligne. Au cours du montage, le jonc 131 est introduit en force dans le trou 128 et se déforme, en suivant la courbure de l'espace de blocage V126. Autrement dit, le jonc 131 est déformable. Le jonc 131 est préférentiellement réalisé en acier. D'autres matériaux sont bien entendu possibles, à l'image de US-5,209,262 qui décrit un élément de blocage axial en nylon.

À la figure 2 b), le jonc 131 est représenté reçu dans l'espace de blocage V126. L'élément de blocage axial 130 est ici entièrement reçu dans l'espace de blocage V126. De préférence, le trou 128 est rebouché après introduction de l'élément de blocage 130 pour éviter l'introduction de poussières, de préférence de manière réversible pour permettre la lubrification de l'élément de blocage axial 130. En variante non représentée, une portion de l'élément de l'élément de blocage 130 dépasse dans le trou 128. Même si cela est techniquement possible, il n'est pas souhaitable que le jonc dépasse à l'extérieur du corps principal 110, car l'utilisateur risquerait de se blesser lors de la manipulation de l'élément femelle 100.

Ainsi, de manière générale, l'élément de blocage 130 est au moins en partie logé dans la rainure circonférentielle externe 126 de la portion tubulaire 124 et en au moins en partie dans la rainure interne 116 de l'alésage 114 du corps principal 110, de sorte que le corps principal 110 est mobile en rotation et bloqué en translation par rapport à l'adaptateur 120.

L'élément femelle 100 comprend aussi un verrou 140, qui est prévu pour maintenir l'embout mâle 10 en position connectée. Le verrou 140 est assemblé à la portion distale 111A du corps principal 110, le verrou 140 étant mobile entre :
- une position de verrouillage, dans laquelle, lorsque l'embout mâle 10 est reçu dans l'embouchure distale 112 en position connectée, le verrou 140 coopère avec la collerette 22 de manière à maintenir l'embout mâle en position connectée, comme illustré à la figure 3, et
- une position de déverrouillage, dans laquelle le verrou 140 libère la collerette 22 et ne s'oppose pas au retrait de l'embout mâle 10 du corps principal 110.

Dans l'exemple illustré, le verrou 140 est partiellement reçu dans le premier passage V110. Le corps principal 110 présente un orifice 118, qui s'étend selon un axe de verrouillage A118, qui est ici un axe radial à l'axe longitudinal A110. Le premier passage V110 débouche du corps principal par l'orifice 118. L'orifice 118 ménage ainsi un logement du verrou 140. L'orifice 118 est borgne, l'orifice 118 présentant un fond 119.

Dans l'exemple illustré, le verrou 140 présente une forme globalement cylindrique à section circulaire et s'étend selon un axe de verrou A140. Lorsque le verrou 140 est reçu dans l'orifice 118, l'axe de verrou A140 est confondu avec l'axe de verrouillage A118. Le verrou 140 est alors guidé en translation par rapport au corps principal 110, les positions de verrouillage et de déverrouillage étant deux positions axiales du verrou 140 le long de l'axe de verrouillage A118.

Le verrou 140 comprend une portion de verrouillage 141, qui présente une ouverture 142, qui est ménagée au travers de la portion de verrouillage 141 selon un axe d'ouverture A142 orthogonal à l'axe de verrou A140. Lorsque l'élément femelle 100 est assemblé, dans une configuration d'utilisation, la portion de verrouillage 141 est reçue dans le premier passage V110, l'ouverture 142 du verrou 140 formant une portion du premier passage V110. L'axe d'ouverture A142 est alors parallèle à l'axe longitudinal A100. L'ouverture 142 du verrou 140 est apte à recevoir l'embout mâle10. En configuration connectée du raccord R, la partie distale 14 de l'embout mâle 10 traverse le verrou 140 par l'ouverture 142 du verrou 140, la collerette 22 étant située dans l'ouverture 142 du verrou 140.

Le verrou 140 comprend ici une dent 144, qui est ménagé en saille dans l'ouverture 142 du verrou 140 et qui est configurée pour coopérer avec la collerette 22 lorsque l'embout mâle est en position connectée. La dent 144 présente une face distale 145A, qui est ici une face conique orientée vers l'ouverture distale 112 du corps principal 110, et une face proximale dite face de verrouillage 145B, qui est une face axiale, c'est-à-dire une face portée par un plan perpendiculaire à l'axe longitudinal A100. La face de verrouillage 145B est orientée vers le côté proximal du corps principal 110.

Lorsque le verrou 140 est en position de verrouillage et que l'embout mâle 10 est en position connectée, la face de verrouillage 145B est située en regard de la face de retenue 22B de la collerette 22, empêchant d'éloigner l'embout mâle 10 de l'élément femelle 100, comme illustré en figure 3. Autrement dit, la face de verrouillage 145B est et apte à pénétrer derrière la collerette 22 de l'embout mâle 10.

L'élément femelle comprend ici aussi un organe de rappel 150, qui est configuré pour ramener le verrou 140 de sa position de déverrouillage vers sa position de verrouillage. L'organe de rappel 150 est ici un ressort de compression, qui est placé entre la portion de verrouillage 141 du verrou et le fond 119 de l'orifice 118, l'organe de rappel 150 agissant, par retour élastique, pour rappeler le verrou dans sa position de verrouillage. Plus précisément, l'organe de rappel 150 est placé entre une face inférieure 146 de la portion de verrouillage 141 et le fond 119.

Le verrou 140 ménage une surface d'actionnement 148, qui est une surface accessible depuis l'extérieur de l'élément femelle 100 et qui est prévue pour qu'un utilisateur puisse déplacer le verrou 140 de la position de verrouillage vers la position de déverrouillage, à l'encontre de l'organe de rappel 150. Dans l'exemple illustré, la surface d'actionnement 148 est une surface opposée de la face inférieure 146. La surface d'actionnement 148 présente ici une normale globalement perpendiculaire à l'axe longitudinal A100. Autrement dit, la surface d'actionnement 148 est une surface radiale, orientée de manière centrifuge à l'axe longitudinal A100.

L'élément femelle 100 comprend aussi un support de joints 160. Le support de joints 160 est reçu dans le canal interne V100 et ménage un passage interne V160. Le support de joints 160 est situé d'un côté proximal du verrou 140, le passage interne V160 étant configuré pour recevoir la partie distale 14 de l'embout mâle 10 en position connectée.

Le support de joints 160 présente avantageusement une forme de révolution autour de l'axe longitudinal A100. Dans le premier mode de réalisation, le support de joints 160 est reçu dans le canal interne V100 en étant libre en rotation par rapport au corps principal 110 de l'élément femelle 100 en configuration assemblée. Le support de joints 160 présente globalement une forme annulaire, plus précisément une forme de révolution autour de l'axe longitudinal A100. De préférence, le support de joints 160 est réalisé en matériau polymère synthétique, et fabriqué de préférence par injection à chaud.

Le support de joints 160 comprend une partie distale 161A et une partie proximale 161B. La partie proximale 161B, qui est configurée pour être reçue dans la portion tubulaire 124, comprend une surface externe, c'est-à-dire orientée à l'opposé de l'axe longitudinal A100, qui présente un premier diamètre externe. Un diamètre interne de la portion tubulaire 124 est supérieur ou égal au premier diamètre externe de la partie proximale 161B du support de joints 160.

Le support de joints 160 comprend une première gorge 162, qui est située en regard, de la portion tubulaire 124, du côté interne. La première gorge 162 est ici ménagée, en creux, sur la surface externe de la partie proximale 161B du support de joints 160. Autrement dit la partie proximale 161B du support de joints 160 est reçue dans le deuxième passage V120 de l'adaptateur, plus précisément dans la portion tubulaire 124.

La première gorge 162 est prévue pour recevoir un premier joint 191 d'étanchéité. La première gorge 162 est une gorge circonférentielle externe. On considère que le premier joint 191 appartient au support de joints 160. Le premier joint 191 est interposé entre le support de joints 160 et une surface intérieure de la portion tubulaire 124 de l'adaptateur 120, de manière à assurer une étanchéité entre le support de joints 160 et l'adaptateur 120.

Le support de joints 160 ménage une deuxième gorge 163, qui est ménagée dans le passage interne V160 du support de joints 160. La deuxième gorge 163 est donc une gorge interne. La deuxième gorge 163 est ici ménagée dans une face interne de la portion distale 161A du support de joints 160. Dans le premier mode de réalisation, la deuxième gorge 163 est une gorge débouchante, c'est-à-dire que la deuxième gorge est partiellement ouverte sur un côté, ici sur vers le côté distal du support de joints 160. La deuxième gorge 163 est prévue pour recevoir un deuxième joint 192 d'étanchéité. On considère que le deuxième joint 192 appartient au support de joints 160. Le deuxième joint 192 d'étanchéité est destiné à coopérer avec la première partie cylindrique 20 de la partie distale 14 de l'embout mâle 10, lorsque l'embout mâle 10 est en position connectée, de manière à empêcher les passages de fluide entre le support de joints 160 et l'embout mâle 10.

Ainsi, grâce au support de joints 160, qui porte les premier et deuxième joints 191 et 192, l'étanchéité entre l'adaptateur 120, le support de joints 160 et l'embout mâle 10 en position connectée est assurée.

Avantageusement, le support de joints 160 comprend, du côté distal de la première gorge 162, une partie intermédiaire 161C qui s'étend, du côté distal, au-delà de la surface d'extrémité 125 de la portion tubulaire 124. La partie intermédiaire 161C présente un deuxième diamètre externe, qui est supérieur au premier diamètre externe de la partie proximale 161B du support de joints 160. Autrement dit, la partie intermédiaire 161C forme une saille annulaire par rapport à la partie proximale 161B. En particulier, le deuxième diamètre externe de la partie intermédiaire 161C est supérieur au diamètre interne de la portion tubulaire 124, mais inférieur au deuxième diamètre interne de la deuxième portion cylindrique 117B de l'alésage 114. En configuration assemblée de l'élément femelle 100, la partie intermédiaire 161C est logée dans la deuxième portion cylindrique 117B de l'alésage 114. Ainsi, les mouvements axiaux du support de joints 160 par rapport au reste de l'élément femelle 100 sont limités. Le montage du support de joints 160 est simple, car le support de joints 160 reçu dans la seconde partie cylindrique 117B de l'alésage 114 et maintenu par la partie distale 124 de l'obturateur 120.

Le raccord femelle 100 comprend une rondelle de butée 170, qui est reçue dans le premier passage V110 entre le verrou 140 et le support de joints 160. La rondelle de butée 170 est configurée pour maintenir le verrou 140 captif dans l'orifice 118.

Dans le premier mode de réalisation de l'invention, le support de joints 160 et la rondelle de butée 170 forment deux pièces distinctes.

La rondelle de butée 170 comprend :
- une paroi proximale 171, qui présente ici une forme d'anneau centré sur l'axe longitudinal A100, la paroi proximale comprenant une face distale 172A, qui est située en regard de la paroi de butée 117D de l'alésage 114 et par laquelle la rondelle de butée 170 est en appui axial contre la paroi de butée 117D, et une face proximale 172B, qui est située en regard d'une paroi distale du support de joints 160.
- une extension 173, qui est ménagée en saillie depuis la paroi proximale 171 et qui s'étend, par-delà la troisième portion cylindrique 117C, dans l'orifice 118. En particulier, l'extension 173 s'étend dans l'ouverture 142 du verrou 140, de manière à centrer la rondelle de butée 173 dans la troisième portion cylindrique 117C.

Dans l'exemple illustré, la paroi proximale 171 coopère avec le support de joints 160, la paroi proximale 171 venant former un troisième côté en plus des deux côtés de la deuxième gorge 163. Autrement dit, le deuxième joint 192 est logé dans une gorge, délimitée d'une part par la deuxième gorge 163 débouchante et, d'autre part, par la paroi proximale 171 de la rondelle de butée 170. Lorsque le raccord est assemblé, la rondelle de butée 170 est en appui axial contre une paroi distale 164 du support de joints 160.

L'extension 173 présente ici globalement une forme de révolution autour de l'axe longitudinal A100, avec ici une section globalement triangulaire dans un plan contenant l'axe longitudinal A100. L'extension 173 ménage :
- une protrusion 174, qui s'étend dans l'ouverture 142 du verrou 140 et qui est prévue pour autoriser les mouvements du verrou 140 entre la position de verrouillage et la position de déverrouillage, tout en empêchant les mouvements au-delà de la position de verrouillage. Autrement dit, l'extension 173 est configurée pour stopper la translation du verrou 140 dans sa position de verrouillage.
- une surface de guidage 176, qui est prévue pour guider l'extrémité de l'embout mâle 10 de l'ouverture 142 du verrou 140 vers le passage interne V160 du support de joints 160.

La surface de guidage 176 présente ici une forme tronconique, qui converge vers le côté proximal de l'élément femelle 100. La rondelle de butée est de préférence fabriquée en métal, de manière à résister aux frottements de l'embout mâle 10 sur la surface de guidage 176 lors des mouvements de connexion ou de déconnexion.

Le raccord femelle 100 comprend également une soupape 180, qui est reçue dans le canal interne V100 et qui est mobile en translation le long de l'axe longitudinal A100 entre :
- une position avant, dans laquelle la soupape ferme le canal interne V100, et
- une position arrière, dans laquelle la circulation de fluide au travers du canal interne V100 n'est pas empêchée.

Le raccord femelle 100 comprend un ressort de soupape 181, qui est configuré pour ramener la soupape 180 de sa position arrière à sa position avant. La soupape 180 est configurée pour être repoussée dans la position arrière, à l'encontre du ressort de soupape 181, par l'extrémité 16 de l'embout mâle 10 en position connectée.

La soupape 180 est avantageusement agencée d'un côté opposé à l'embouchure distale 112 du corps principal 110 par rapport au deuxième joint 192, autrement dit d'un côté arrière du deuxième joint 192. La soupape 180 comprend :
- une partie distale 182, qui est reçue dans le passage interne V160 du support de joints 160 lorsque la soupape 180 est en position fermée, et par l'intermédiaire de laquelle la soupape est repoussée en position ouverte par l'extrémité 16 de l'embout mâle 10 en position connectée, et
- une butée axiale 184, qui s'étend radialement à l'axe longitudinal A100 et qui présente une face avant 185A, qui est en appui axial contre le support de joints 160 lorsque la soupape 180 est dans la position fermée, et une face arrière 185B, opposée à la face avant 185A.

Dans l'exemple illustré, la partie distale 182 de la soupape 180 s'étend en saillie depuis la butée axiale 184, la soupape 180 ménageant une troisième gorge 186 prévue pour recevoir un troisième joint d'étanchéité 193. En position avant de la soupape, le troisième joint 193 est interposé entre la soupape et le support de joints 160, le passage interne V160 du support de joints 160 étant alors obturé de manière étanche. Le ressort de soupape 181 est agencé entre la face arrière 185B de la butée axiale 184 et l'adaptateur 120. Lorsque le raccord fluidique est déconnecté, l'effort de rappel du ressort de soupape 181 est transmis au corps principal 110 et s'applique entre l'élément de blocage 130 et l'adaptateur 120. Cet effort de rappel, dont la valeur est bien déterminée et stable au cours de la vie de l'élément femelle 100, assure un couple résistant lorsque l'utilisateur tourne le corps principal 110 par rapport à l'adaptateur 120.

On décrit à présent l'assemblage de l'élément femelle 100.

On considère que toutes les pièces de l'élément femelle 100 sont initialement séparées, comme illustré à la figure 2 a). L'assemblage de l'élément femelle 100 comporte les étapes suivantes :
- Disposer le ressort de verrou 150 au fond 119 de l'orifice 118 ménagé dans le corps principal 110, puis
- Insérer le verrou 140 dans l'orifice 118, de manière à comprimer le ressort de verrou 150, puis
- Mettre en place la rondelle de butée 170 en passant par l'alésage 114, de manière à maintenir le verrou 140, puis
- Insérer le support de joints 160 dans le corps principal 110 en passant par l'alésage 114, les premier et deuxièmes joints 191 et 192 étant préalablement mis en place dans la première gorge 162 et dans la deuxième gorge 163, puis
- Insérer la soupape 180 dans le corps principal 110 en passant par l'alésage 114, le troisième joint 193 étant préalablement mis en place dans la troisième gorge 186, la partie distale 182 de la soupape 180 étant introduite dans le passage interne V160 du support de joints 160,
- Disposer le ressort de soupape 181 dans la partie tubulaire 124 de la partie distale 121A de l'adaptateur 120, puis
- Emmancher la partie tubulaire 124 dans l'alésage 114, le ressort de soupape 181 étant conjointement en appui contre la face arrière 185B de la butée axiale 184 et l'adaptateur 120, puis
- Mettre en place l'élément de blocage axial 130 dans l'espace de blocage V126, en passant par le trou 128.

On décrit à présent une séquence d'accouplement de l'élément femelle 100 et de l'embout mâle 10.

Pour accoupler l'élément femelle 100 de raccord R et l'embout mâle 10, initialement on positionne l'extrémité 16 de l'embout mâle 10 en regard de l'embouchure distale 112 de l'élément femelle, l'axe longitudinal A100 de l'élément femelle 100 étant aligné avec l'axe principal A10 de l'embout mâle 10, comme illustré à la figure 1. Ensuite, on rapproche l'élément femelle 100 de l'embout mâle 10.

Au cours du rapprochement :
- l'extrémité 16 de l'embout mâle 10 entre en contact avec la surface de guidage 176, de manière à maintenir l'embout mâle 10 aligné sur l'axe longitudinal A100. Ensuite la première partie cylindrique 20 coopère avec le deuxième joint 192, assurant l'étanchéité entre l'embout mâle 10 et le support de joints 160.
- La première face 22A conique de la collerette 22 entre en contact avec la dent 144 du verrou 140, repoussant le verrou 140 de sa position de verrouillage vers sa position de déverrouillage,
   tandis que l'extrémité 16 de l'embout mâle 10 entre en contact avec la soupape 180, entrainant la soupape 180 vers sa position arrière. Le passage interne V10 est alors en communication fluidique avec le canal interne V100.
- Lorsque la dent 144 du verrou 140 arrive derrière la collerette 22 de l'embout mâle 10, le verrou 140 regagne sa position de verrouillage sous l'effet du ressort de verrou 150. L'élément femelle 100 et l'embout mâle 10 sont alors connectés l'un à l'autre, le raccord R étant dans la configuration connectée, dans laquelle le passage du fluide est libre, comme illustré à la figure 3.

Il est possible de changer l'orientation du corps principal 110 par rapport à l'adaptateur 120, sans avoir à faire subir de glissement aux premier, deuxième et troisième joints 191, 192 et 193. Autrement dit, la rotation du corps principal 110 par rapport à l'adaptateur 120 ne cause ni usure ni frottement aux joints 191/192/193.

Lorsque l'élément femelle 10 n'est pas connecté à l'embout mâle 10, l'étanchéité de la conduite de fluide est assurée par le premier joint 191 du support de joints 160 et le troisième joint 193 de la soupape 180. Du fait de la construction choisie, il est possible de réorienter le corps principal 110 par rapport à l'adaptateur 120 sans faire frotter les deux joints 191/193, c'est-à-dire en évitant toute usure.

On décrit à présent une séquence de désaccouplement de l'élément femelle 100 et de l'embout mâle 10.

Alors que le raccord R est initialement dans la configuration connectée, pour désaccoupler, il est nécessaire d'actionner le verrou 140 en appuyant sur la face d'actionnement 148. La dent 144 du verrou 140 se dégage alors de la collerette 22 de l'embout mâle 10. Il est alors possible d'éloigner l'embout mâle 10 de l'élément femelle 100 suivant l'axe longitudinal A100.

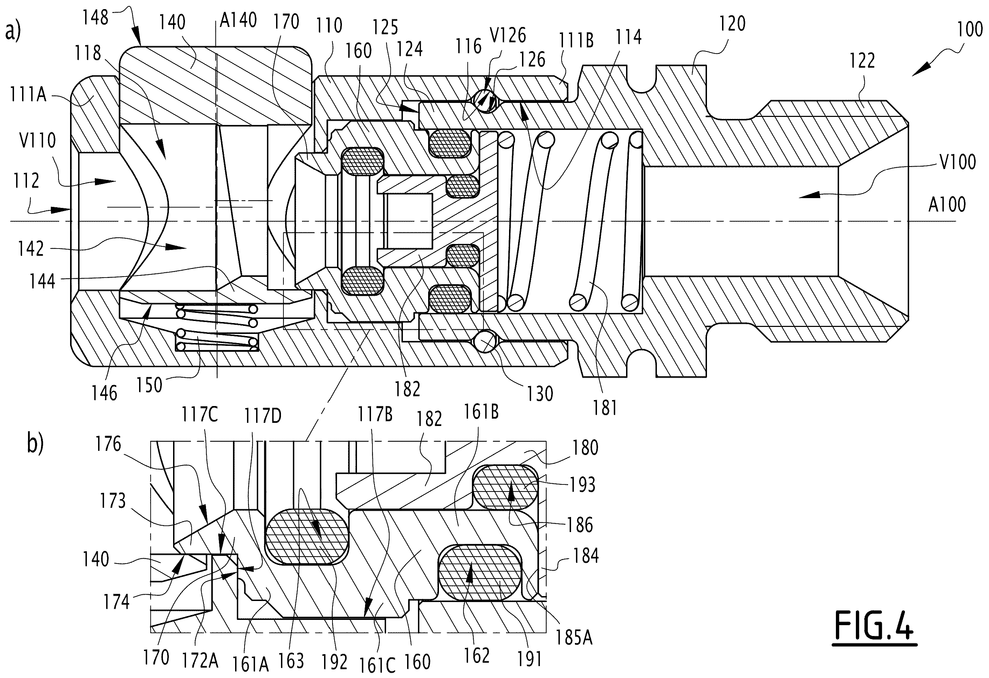

Des modes de réalisation alternatifs de l'invention sont illustrés aux figures 4 à 8. Dans les modes de réalisation alternatifs de l'invention, les éléments analogues à ceux des autres modes de réalisation portent les mêmes références et fonctionnent de la même façon. Dans ce qui suit, on décrit principalement les différences entre chaque mode de réalisation et le ou les précédents. En relation avec les modes alternatifs de l'invention, si une référence est mentionnée dans la description sans être portée sur une figure, ou bien si cette référence est portée sur une figure sans être mentionnée dans la description, cette référence désigne le même élément que celui portant la même référence dans le premier mode de réalisation.

Un deuxième mode de réalisation de l'invention est représenté en figure 4. Une des principales différences du deuxième mode de réalisation avec le mode de réalisation précédent est que le support de joints 160 et la rondelle de butée 170 forment une pièce unique. Le support de joints 160 et la rondelle de butée 170 sont par exemple réalisés en matière polymère synthétique et sont produits par injection à chaud. Alternativement, support de joints 160 et la rondelle de butée 170 sont réalisés en métal, par exemple par usinage.

L'assemblage de l'élément femelle de raccord est similaire à celui du premier mode de réalisation mais comporte une étape de moins.

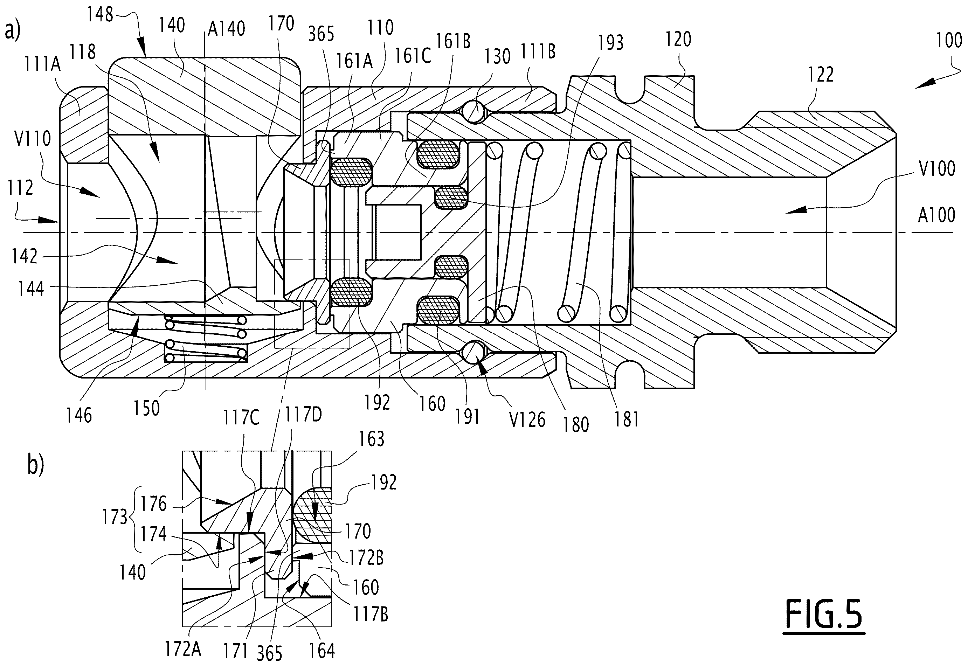

Un troisième mode de réalisation de l'invention est représenté en figure 5. Dans le troisième mode de réalisation, le support de joints 160 et la rondelle de butée 170 forment deux pièces distinctes, une des principales différences du troisième mode de réalisation avec le premier mode de réalisation étant que le support de joints 160 comprend un bossage circulaire 365, qui est ménagé sur la paroi distale 164 du support de joints 160.

La rondelle de butée 170 est en appui axial contre la paroi distale 164 du support de joints par l'intermédiaire du bossage circulaire 365.

La surface de contact entre la rondelle de butée 170 et le support de joints 160 est réduite, ce qui permet d'abaisser le couple de frottement entre le support de joints 160 et la rondelle de butée 170. En résultat, le glissement occasionné par la rotation du corps principal 110 par rapport à l'adaptateur 120 se produit préférentiellement entre la rondelle de butée 170 et le support de joints 160, et non pas entre la rondelle de butée 170 et le corps principal 110 ou entre le support de joints 160 et la soupape 180 ou entre le support de joints 160 et l'adaptateur 120. Le risque que le premier joint d'étanchéité 191 du support de joints 160 ne frotte lorsque l'on oriente le corps principal 110 par rapport à l'adaptateur 120 est ainsi réduit. En alternative non illustrée, le bossage circulaire est réalisé sur la face proximale 172B de la rondelle de butée 170, la face proximale 172B étant située en regard la paroi distale 164 du support de joints 160.

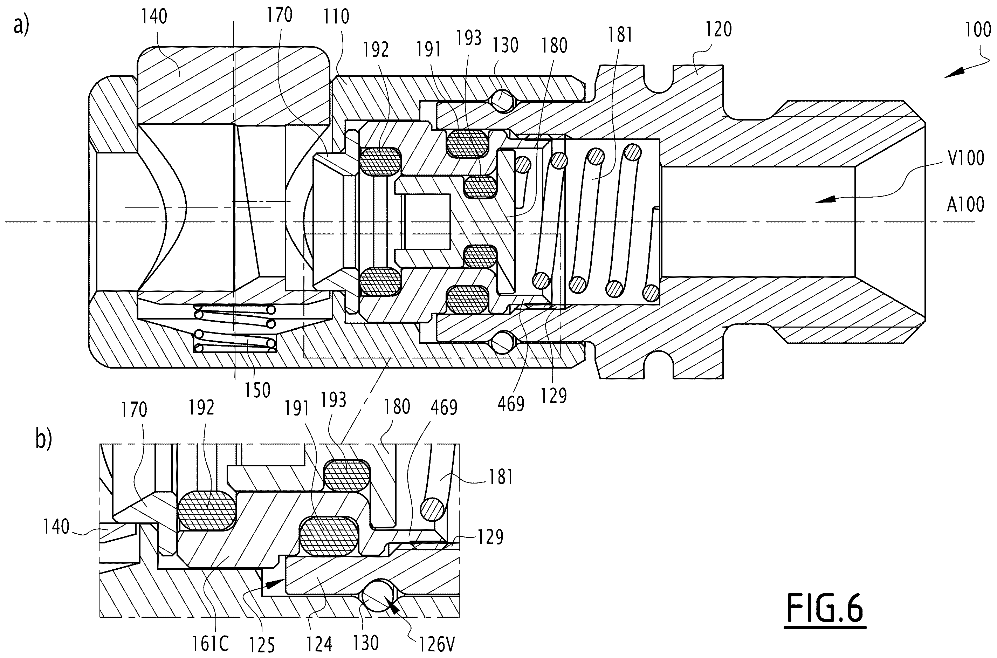

Un quatrième mode de réalisation de l'invention est représenté en figure 6. Une des principales différences du quatrième mode de réalisation avec les précédents modes de réalisation est que le support de joints 160 est vissé dans une surface interne de la partie distale de l'adaptateur 120.

Le support de joints 160 comprend ici une portion filetée 469, qui est située du côté proximal du premier joint 191, et qui coopère avec une portion taraudée 129 de la paroi interne de la portion tubulaire 124 de la partie distale 121A de l'adaptateur 120. Autrement dit, alors que le support de joints 160 est libre en rotation par rapport au corps principal 110, le support de joints 160 est bloqué en rotation par rapport à l'adaptateur 120. Cette solution est plus onéreuse que les précédentes mais garantit que lorsque l'on oriente le corps principal 110 par rapport à l'adaptateur 120, le premier joint d'étanchéité 191 du support de joints 160 ne frotte pas.

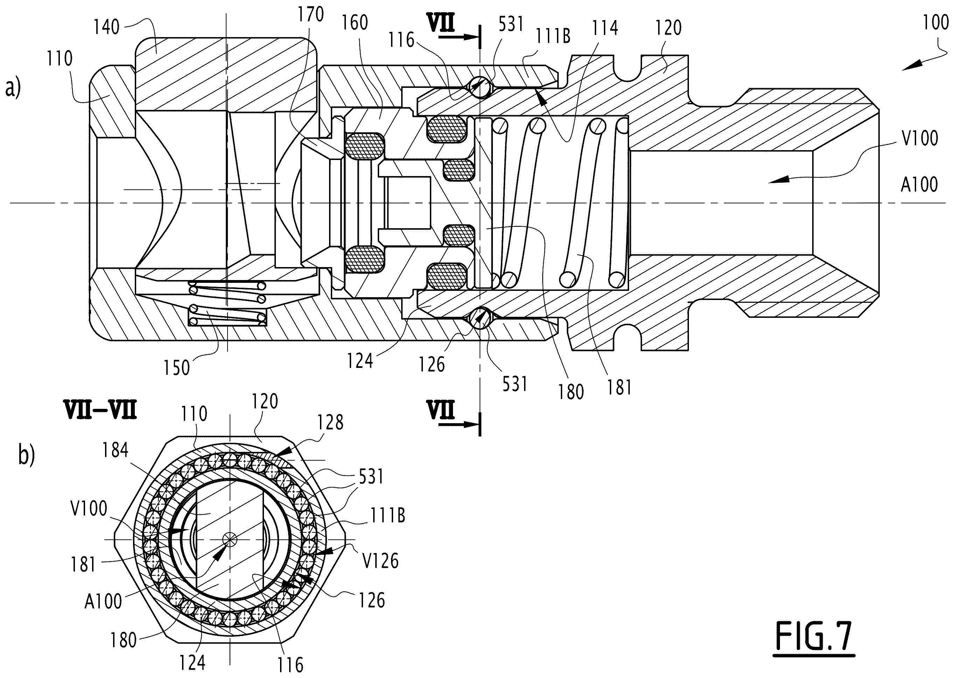

Un cinquième mode de réalisation de l'invention est représenté en figure 7. Une des principales différences du cinquième mode de réalisation avec les précédents modes de réalisation est l'élément de blocage 130 est une pluralité de billes 531. Les billes 531 sont introduites dans l'espace de blocage V126 par le trou 128, qui est obstrué après montage. Ainsi la pluralité de billes 531 permet, à l'image d'un roulement à billes, de réduire les frottements entre le corps principal 110 et l'adaptateur 120, ce qui facilite l'orientation et réduit l'usure tout au long de la durée de vie de l'élément femelle 100, contribuant à la longévité de l'élément femelle 100 et à la stabilité du couple de rotation du corps principal 110 par rapport à l'obturateur 120.

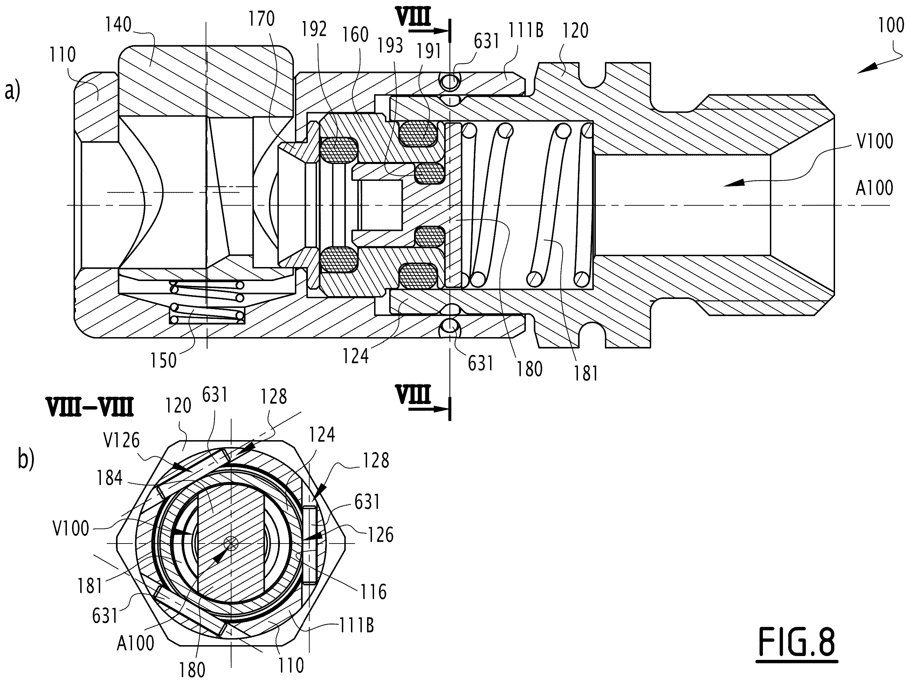

Un sixième mode de réalisation de l'invention est représenté en figure 8. Une des principales différences du sixième mode de réalisation avec les autres modes de réalisation est que la portion proximale 111B du corps principal 110 comprend une pluralité de trous 128, qui sont chacun prévus pour recevoir une goupille 631 respective. En configuration assemblée de l'élément femelle 100, les trous 128 relient la rainure circonférentielle externe 126 à l'extérieur du corps principal 110, aussi les portions des trous 128 qui débouchent en partie dans l'alésage 114 et sont en regard de la rainure circonférentielle externe 126 forment la rainure interne 116. Autrement dit, l'ensemble des trous 128 de passage de goupille forment ensemble la rainure interne 116.

L'espace de blocage V126 est formé par la réunion de la rainure circonférentielle externe 126 et de chaque portion de trou 128 débouchant en regard. Les trous 128 sont avantageusement ménagés orthoradialement à l'axe longitudinal A100.

L'élément de blocage 130 est ici formé par une pluralité de goupilles 631, chaque goupille 631 étant introduite dans l'espace de blocage V126 défini entre la rainure circonférentielle externe 126 et la rainure interne 116 par le trou 128 de passage correspondant. Les goupilles 631 sont maintenues en place dans le trou 128 respectif par serrage, conférant de la robustesse à l'élément femelle 100. Les goupilles 631 sont avantageusement démontables, ce qui permet de démonter l'élément femelle 100, par exemple à des fins de maintenance.

Les modes de réalisation et les variantes mentionnées ci-dessus peuvent être combinés entre eux pour générer de nouveaux modes de réalisation de l'invention.

## Revendications

1. Élément femelle (100) de raccord fluidique (R), l'élément femelle (100) étant prévu pour être connecté à un embout mâle (10), l'embout mâle (10) comprenant une extrémité (16) avec une première partie cylindrique (20) et une collerette (22) de verrouillage, l'élément femelle (100) comprenant :
- un corps principal (110), qui ménage un premier passage (V110) s'étendant suivant un axe longitudinal (A100), le corps principal (110) comprenant une portion distale (111A) et une portion proximale (111B), qui sont alignées selon l'axe longitudinal (A100), le premier passage (V110) débouchant de la portion distale (111A) par une embouchure distale (112), le corps principal (110) étant configuré pour recevoir l'embout mâle (10) dans le premier passage (V110) en passant par l'embouchure distale (112),
- un verrou (140), qui est assemblé à la portion distale (111A) et qui est mobile entre :
• une position de verrouillage, dans laquelle, lorsque l'embout mâle (10) est reçu dans l'embouchure distale (112) en position connectée, le verrou (140) coopère avec la collerette (22) de manière à maintenir l'embout mâle (10) en position connectée, et
• une position de déverrouillage, dans laquelle le verrou (140) libère la collerette (22) et ne s'oppose pas au retrait de l'embout mâle (10) du corps principal (110),
- un organe de rappel (150), qui est configuré pour ramener le verrou (140) de sa position de déverrouillage vers sa position de verrouillage,
- un adaptateur (120), qui est traversé par un deuxième passage (V120) et qui comprend :
• une partie proximale (121B), de laquelle débouche le deuxième passage (V120) et par laquelle l'adaptateur (120) est apte à être fluidiquement connecté à une canalisation, et
• une partie distale (121A), de laquelle débouche le deuxième passage (V120) et par laquelle l'adaptateur (120) est apte à être assemblé à la portion proximale (111B) du corps principal (110), de sorte que le deuxième passage (V120) est en communication avec le premier passage (V110), le premier passage (V110) et le deuxième passage (V120) formant ensemble un canal interne (V100) de l'élément femelle (100),
dans lequel :
- la partie distale (121A) de l'adaptateur (120) comporte une portion tubulaire (124), qui présente une forme cylindrique dans laquelle est ménagée une rainure circonférentielle externe (126),
- la portion proximale (111B) du corps principal (110) comporte un alésage (114) :
• qui présente une forme complémentaire de la portion tubulaire (124) et qui est configuré pour recevoir la portion tubulaire (124) de l'adaptateur (120) dans une configuration assemblée de l'élément femelle (100), et
• dans lequel est ménagée une rainure interne (116), qui est située en regard de la rainure circonférentielle externe (126) lorsque l'élément femelle (100) est en configuration assemblée, la rainure circonférentielle externe (126) et la rainure interne (116) en regard formant ensemble un espace de blocage (V126),
- l'élément femelle (100) comprend aussi un élément de blocage axial (130), qui est logé en partie dans la rainure circonférentielle externe (126) de la portion tubulaire (124) de l'adaptateur (120) et en partie dans la rainure interne (116) de l'alésage (114) de la portion proximale (111B) du corps principal (110), de sorte que le corps principal (110) est mobile en rotation par rapport à l'adaptateur (120),
- l'élément femelle (100) comprend aussi :
• un support de joints (160), qui est reçu dans le canal interne (V100) et qui ménage un passage interne (V160) configuré pour recevoir la partie cylindrique (20) de l'embout mâle (10),
• un premier joint d'étanchéité (191), qui est interposé entre le support de joints (160) et une surface intérieure de la portion tubulaire (124) de l'adaptateur (120), de manière à assurer une étanchéité entre le support de joints (160) et l'adaptateur (120),
• un deuxième joint d'étanchéité (192), qui est agencé dans le passage interne (V160) et qui est prévu pour assurer une étanchéité entre le support de joints (160) et l'embout mâle (10) en position connectée,
- le support de joints (160) est reçu dans le canal interne (V100) en étant libre en rotation par rapport au corps principal (110) de l'élément femelle (100) en configuration assemblée.

2. Élément femelle (100) selon la revendication 1, dans lequel :
- l'alésage (114) de la portion proximale (111B) comprend :
• une première portion cylindrique (117A), qui présente un premier diamètre interne et qui est destinée à recevoir la portion tubulaire (124) de l'adaptateur (120),
• une deuxième portion cylindrique (117B), qui présente un deuxième diamètre interne, le deuxième diamètre interne étant inférieur au premier diamètre interne,
• une troisième portion cylindrique (117C), qui présente un troisième diamètre interne, le troisième diamètre interne étant inférieur au deuxième diamètre interne,
• une paroi de butée (117D), qui s'étend dans un plan perpendiculaire à l'axe longitudinal (A100) entre la deuxième portion cylindrique (117B) et la troisième portion cylindrique (117C),
- le support de joints (160) comprend :
• une partie proximale (121B), qui présente un premier diamètre externe et dans laquelle est ménagée une première gorge (162) de réception du premier joint d'étanchéité (191), et
• une partie intermédiaire (161C), qui présente un deuxième diamètre externe, le deuxième diamètre externe étant supérieur au premier diamètre externe, la partie intermédiaire (161C) étant logée dans la deuxième portion cylindrique (117B) de l'alésage (114).

3. Élément femelle (100) selon l'une quelconque des revendications 1 ou 2, dans lequel :
- la portion distale (111A) du corps principal (110) ménage un orifice (118), qui s'étend selon un axe de verrouillage (A118) radial à l'axe longitudinal (A100) et qui débouche dans le premier passage (V110),
- le verrou (140) comprend une portion de verrouillage (141), qui est reçue dans l'orifice (118) et dans laquelle est ménagée une ouverture (142) apte à recevoir l'embout mâle (10),
- le verrou (140) est mobile en translation par rapport au corps principal (110) selon l'axe de verrouillage (A118), la position de verrouillage et la position de déverrouillage étant deux positions axiales le long de l'axe de verrouillage (A118),
- l'élément femelle (100) comprend une rondelle de butée (170), qui est reçue dans le canal interne (V100) entre le verrou (140) et le support de joints (160), la rondelle de butée (170) comprenant :
• une protrusion (174), qui s'étend dans l'ouverture du verrou (140) et qui est prévue pour autoriser les mouvements du verrou (140) entre la position de verrouillage et la position de déverrouillage, tout en empêchant les mouvements au-delà de la position de verrouillage et,
• une surface de guidage (176), qui est prévue pour guider la première partie cylindrique (20) de l'embout mâle (10) de l'ouverture du verrou (140) vers le passage interne (V160) du support de joints (160).

4. Élément femelle (100) selon la revendication 3, dans lequel :
- l'alésage (114) de la portion proximale (111B) du corps principal (110) comprend :
• une première portion cylindrique (117A), qui présente un premier diamètre interne et qui est destinée à recevoir la portion tubulaire (124) de l'adaptateur (120),
• une deuxième portion cylindrique (117B), qui présente un deuxième diamètre interne, le deuxième diamètre interne étant inférieur au premier diamètre interne,
• une troisième portion cylindrique (117C), qui présente un troisième diamètre interne, le troisième diamètre interne étant inférieur au deuxième diamètre interne,
• une paroi de butée (117D), qui s'étend dans un plan perpendiculaire à l'axe longitudinal (A100) entre la deuxième portion cylindrique (117B) et la troisième portion cylindrique (117C),
- la rondelle de butée (170) est en appui axial contre la paroi de butée (117D) et centrée dans la troisième portion cylindrique (117C).

5. Élément femelle (100) selon l'une quelconque des revendications 3 ou 4, dans lequel :
- le support de joints (160) et la rondelle de butée (170) forment une pièce unique.

6. Élément femelle (100) selon l'une quelconque des revendications 3 ou 4, dans lequel :
- le support de joints (160) et la rondelle de butée (170) forment deux pièces distinctes,
- le support de joints (160) comprend une paroi distale (164), qui est orientée vers la rondelle de butée (170) et sur laquelle est ménagé un bossage circulaire (365),
- la rondelle de butée (170) est en appui axial contre la paroi distale (164) du support de joints (160) par l'intermédiaire du bossage circulaire (365).

7. Élément femelle (100) selon l'une quelconque des revendications 3 ou 4, dans lequel :
- le support de joints (160) et la rondelle de butée (170) forment deux pièces distinctes,
- le support de joints (160) comprend une paroi distale (164), qui est orientée vers la rondelle de butée (170),
- la rondelle de butée (170) comprend une face proximale (172B), sur laquelle est ménagé un bossage circulaire en appui axial contre la paroi distale (164) du support de joints (160).

8. Élément femelle (100) selon l'une quelconque des revendications 1 à 7, dans lequel l'élément femelle (100) comprend :
- une soupape (180), qui est reçue dans le canal interne (V100) et qui est mobile en translation le long de l'axe longitudinal (A100) entre :
• une position avant, dans laquelle la soupape (180) ferme la circulation de fluide au travers du canal interne (V100), et
• une position arrière, dans laquelle la circulation de fluide au travers du canal interne (V100) n'est pas empêchée,
- un ressort de soupape (180), qui est configuré pour ramener la soupape (180) de la position arrière à la position avant, la soupape (180) étant configurée pour être repoussée dans la position arrière, à l'encontre du ressort de soupape (180), par l'extrémité (16) de l'embout mâle (10) en position connectée.

9. Élément femelle (100) selon la revendication 8, dans lequel :
- la soupape (180) est agencée d'un côté opposé à l'embouchure distale (112) du corps principal (110) par rapport au deuxième joint (192), la soupape (180) comprenant :
• une partie distale (182), qui est reçue dans le passage interne (V160) du support de joints (160) lorsque la soupape (180) est en position fermée et par l'intermédiaire de laquelle la soupape (180) est repoussée en position ouverte par l'extrémité (16) de l'embout mâle (10) en position connectée, et
• une butée axiale (184), qui s'étend radialement à l'axe longitudinal (A100) et qui présente une face avant (185A), qui est en appui axial contre le support de joints (160) lorsque la soupape (180) est dans la position fermée, la butée axiale (184) présentant une face arrière (185B), opposée à la face avant (185A),
- le ressort de soupape (180) est agencé entre la face arrière (185B) de la butée axiale (184) et l'adaptateur (120).

10. Élément femelle (100) selon l'une quelconque des revendications 1 à 9, dans lequel :
- le support de joints (160) est vissé dans une surface interne de la partie distale (121A) de l'adaptateur (120).

11. Élément femelle (100) selon l'une quelconque des revendications 1 à 10, dans lequel :
- la rainure interne (116) de l'alésage (114) est une rainure circonférentielle interne,
- l'élément de blocage (130) est un jonc (131) déformable, qui est introduit dans l'espace de blocage (V126) par un trou (128) ménagé dans le corps principal (110).

12. Élément femelle (100) selon l'une quelconque des revendications 1 à 10, dans lequel :
- la rainure interne (116) de l'alésage (114) est une rainure circonférentielle interne,
- l'élément de blocage (130) est une pluralité de billes (531), qui sont introduites dans l'espace de blocage (V126) par un trou (128) ménagé dans le corps principal (110), le trou (128) étant obstrué après montage.

13. Élément femelle (100) selon l'une quelconque des revendications 1 à 10, dans lequel :
- l'alésage (114) proximal du corps principal (110) comprend une pluralité de trous (128), qui sont chacun prévus pour le passage d'une goupille (631) respective, qui sont ménagés orthoradialement à l'axe longitudinal (A100) et qui débouchent dans l'alésage (114), l'ensemble des trous (128) de passage de goupille formant la rainure interne (116),
- les goupilles (631) forment ensemble l'élément de blocage (130), chaque goupille (631) étant introduite dans l'espace de blocage (V126) par le trou (128) de passage correspondant.

14. Raccord fluidique (R), comprenant :
- un exemplaire de l'élément femelle (100) selon l'une quelconque des revendications 1 à 13, et
- un embout mâle (10), qui comprend une extrémité (16) avec une première partie cylindrique (20) et une collerette (22) de verrouillage,
dans lequel l'embout mâle (10) est reçu en position connectée dans le canal interne (V100) de l'élément femelle (100).
